# EUROPÄISCHE PATENTSCHRIFT

(11) **EP 3 430 894 B1**
(45) Veröffentlichungstag und Bekanntmachung des Hinweises auf die Patenterteilung: **02.03.2022**
(21) Anmeldenummer: 18178410.9
(22) Anmeldetag: 19.06.2018
(51) Int. Cl.: A01K 5/00, A01K 5/02

(54) **ANLAGE ZUR VIEHFÜTTERUNG**
INSTALLATION FOR LIVESTOCK FEEDING
INSTALLATION D'ALIMENTATION D'ANIMAUX

(30) Priorität: 21.07.2017 DE 202017104377 U
(43) Veröffentlichungstag der Anmeldung: 23.01.2019
(60) Teilanmeldung: 20185236.5
(73) Patentinhaber: Trioliet B.V., 7575 BE Oldenzaal (NL)
(72) Erfinder: Liet, Cornelis Hendricus, 7581 PJ Losser (NL)
(74) Vertreter: Grünecker Patent- und Rechtsanwälte PartG mbB

(56) Entgegenhaltungen:
- WO-A1-2014/120000
- WO-A1-2014/120000
- DE-A1- 10 345 322
- DE-A1- 10 345 322
- DE-U1-202013 105 907
- DE-U1-202013 105 907

## Beschreibung

Die Erfindung betrifft eine Anlage gemäß Oberbegriff des Patentanspruchs 1.

Der in der Anlage zwischen den Lagern und den Ställen selbstfahrende Roboter muss als Fütter-Roboter geladenes Futter gut und schnell vermischen und gegebenenfalls verschneiden, falls es nicht in den als Verteilroboter eingesetzten Roboter schon vorgemischt geladen wird. Speziell zum Mischen wird erhebliche elektrische Leistung benötigt. Bei einem Roboter mit ca. 3 m³ Fassungsvermögen werden bei einer Futterdichte von etwa 350 kg/m³ etwa 11 Kw benötigt. Auch zum Selbstfahren, entweder über eine Hängeschiene oder auf einem Fahrgestell zu den und von den Ausdosierstellen und das Ausdosieren z. B. über einen Seitenschieber, Dosierwalzen und/oder mittels eines Querförderbandes wird ebenfalls erhebliche elektrische Leistung benötigt. Pro Tag führt der Roboter beispielsweise 35 Zyklen aus. Aufgrund des hohen Strombedarfs wird im Stand der Technik bislang in der Futterküche eine einzige in der Position vorbestimmte Andockvorrichtung an das Stromnetz installiert, und/oder werden sämtliche Fahrstrecken auch in den Ställen mit Stromschienen ausgestattet. Wenn jedoch die Anlage mehrere Gebäude umfasst, muss die Stromschienenstrecke auch zwischen den Gebäuden installiert werden, was den Verkehr in der Anlage behindert und extreme Kosten für die Tragkonstruktionen bedingt. Außerdem ist die Ansicht vieler Stromschienenstrecken und deren Aufhängungen außerhalb von Gebäuden störend.

In einer aus WO 2014/120000 A1 bekannten Anlage wird ein einachsiger Mischwagen durch einen als Telehandler ausgebildeten Traktor in und aus der Futterküche, zu Silos, und in den und aus dem Stall und zwischen der Futterküche und dem Stall hin- und hergeschleppt. Diese Arbeiten führt der Traktorfahrer aus. Beim Beladen des abgekoppelten Mischwagens in der Futterküche kann der Mischwagen vom Fahrer des Traktors an einer vorbestimmten Position über ein Kabel mit einem stationären Netzanschluss verbunden und eine bordeigene Batterie geladen werden. Die Batterie kann eine Hochvolt-Batterie sein. Beim Schleppen des Mischwagens zum Stall werden Mischorgane aus der Hochvolt-Batterie angetrieben. Im Stall schleppt entweder der Traktor den Mischwagen entlang der Futtergasse, oder wird der Mischwagen an eine im Stall und aus dem Stall geführte, stationäre Leitschiene mit einem daran verfahrbaren Wagen gekoppelt, dabei gegebenenfalls an eine Stromversorgung der Leitschiene angeschlossen, und entlang der Leitschiene geschleppt. In einer weiteren Ausführungsform kann der vom Traktor zum Stall geschleppte Mischwagen ein lenkbares und ein antreibbares Rad aufweisen und ohne Leitschiene im Stall selbstfahrend Futter ausdosieren.

Ein aus DE 103 45 322 A1 bekannter Futtermischwagen kann als Selbstfahrer in Stallgebäuden und allgemein in der Nähe von Tieren betrieben werden, um ein emissionsvermindertes Fahren und Arbeiten zu ermöglichen. Als Energiequelle unter anderem für über Frequenzumrichter gespeiste Wechselstrom-Motoren weist er eine Batterie auf. Bei Nutzen eines stationären Drei-Phasen-Wechselstromnetzes zur Stromversorgung sind zum Beispiel im Mischwagen Gleichrichter-und Wechselrichter-Einheiten vorgesehen.

Bei einem aus DE 20 2013 105 907 U1 bekannten Fütterroboter mit selbstfahrendem Fahrwerk werden die Elektromotoren im Stall über eine Stromversorgungs- und Lenksystem-Schiene mit Strom versorgt. Außerdem sind aufladbare bordeigene Kondensatoren über Frequenzumrichter mit den Elektromotoren verbunden. Die Stromversorgungs- und Lenksystem-Schiene folgt dem Bewegungsweg des Roboters in den Ställen. Zwischen zwei Ställen fährt der Roboter mit Strom aus den Kondensatoren.

Der Erfindung liegt die Aufgabe zugrunde, eine Anlage der eingangs genannten Art zu schaffen, die einen energieeffizienten Betrieb ermöglicht.

Die gestellte Aufgabe wird mit den Merkmalen des Patentanspruchs 1 gelöst.

Da zumindest in der Futterküche eine sich entlang der Lager erstreckende Stromschienenstrecke mit wenigstens einer Andockvorrichtung als Einlauf- bzw. Auslaufstelle für den Roboter vorgesehen ist, kann im ganzen Bereich der Futterküche ohne Batterieeinsatz überall effizient befüllt und, falls erforderlich, Futter gemischt werden. Das Mischen und Verschneiden mit Betrieb des Mischorgans ist nämlich die Arbeit mit dem höchsten Strombedarf. Während am oder im Roboter in der Futter-Küche Arbeiten erfolgen, die ggf. aus der Stromschienenstrecke mit Strom versorgt werden, kann zugleich überall die Batterie geladen oder beigeladen werden. Dabei braucht der Roboter nicht an einer vorbestimmten Position zu stehen, sondern er ist bei Arbeiten in der Futter-küche im Wesentlichen permanent an die Stromschienenstrecke angeschlossen. Sobald der Roboter z.B. seine Mischarbeit abgeschlossen hat oder beladen ist, fährt er selbstständig entlang der Fahrstrecken zu und in den Stall, um auszudosieren, wobei der Fahrbetrieb und das Ausdosieren über Strom aus der Batterie erfolgen können, die schon in der Futterküche voll aufgeladen wurde. Die Ladevorrichtung kann sich im Roboter befinden, und/oder es ist eine oder sind mehrere Ladeeinrichtungen stationär platziert und an die Stromschienenstrecke angeschlossen.

In der Futterküche können sogar mehrere Andockvorrichtungen und/oder Stromschienenstrecken verbaut sein.

Anstelle 12 V- oder 24 V-Batterien mit Standard-Niedrigspannung weist der Roboter wenigstens eine Hochvolt-Batterie auf, die zumindest abgabeseitig an den jeweiligen Zwischenkreis des Frequenzumrichters angeschlossen ist. Die Hochvolt-Batterie und der zur Drehzahlregelung des Elektroantriebs vorgesehene Frequenzumrichter gestatten die Verwendung hocheffizienter Elektromotoren, die relativ kostengünstig sind und hohe Leistung haben, wobei der Anschluss der Batterie an den Kreis den signifikanten Vorteil ergibt, teure und schwere Konverter weglassen zu können, und im Batteriebetrieb mit hoher Abgabe-Gleichspannung der Batterie direkt über den Zwischenkreis des Frequenzumrichters den Elektroantrieb zu versorgen. Zusätzlich zur Stromschienenstrecke in der Futterküche kann in wenigstens einem Stall wenigstens eine weitere Stromschienenstrecke mit mindestens einer Andockvorrichtung vorgesehen sein. Diese Stromschienenstrecke im Stall braucht nicht notwendigerweise die gesamte Futtergasse abzudecken, sondern nur sicherzustellen, dass der Roboter zumindest beim Anfahren der Ausdosierstellen oder beim Abfahren vorübergehend an die Stromschienenstrecke angeschlossen ist und die Batterie wieder auflädt, um beispielsweise beim Ausdosieren mit voller Batterieleistung arbeiten zu können. Auch bei anderen externen Lagern für Futter oder Futterzusätze kann in der Anlage jeweils eine begrenzte Stromschienenstrecke mit Andockvorrichtung vorgesehen sein.

Zweckmäßig sind Abschnitte der Fahrstrecke zwischen der Futterküche und dem jeweiligen Stall frei von Stromschienenstrecken und Andockvorrichtungen, sodass dieses freie Gelände für anderen Verkehr gut zugänglich und nicht durch eine Stromschienenstrecke und deren Aufhängungen verbaut ist.

Die Übertragung des Betriebs-, Arbeits- und/oder Ladestroms von der Stromschienenstrecke zum Roboter kann galvanisch, beispielsweise über als Schleifkontakte ausgebildete Stromabnehmer, oder auch berührungslos erfolgen.

Jede Andockvorrichtung kann einen Einlauftrichter oder ein Zwangslenksystem für den Roboter, vorzugsweise dessen Stromabnehmer, aufweisen. Zweckmäßig sind Stromabnehmer jeweils zweifach vorgesehen, um bei Weichen oder dergleichen stets Kontakt sicherzustellen. Anstelle oder zusätzlich zu einem Einlauftrichter ist es möglich, den oder die Stromabnehmer federnd beweglich auszubilden, um einen ordnungsgemäßen Andockvorgang sicherzustellen.

Um einen leistungsfähigen Elektroantrieb verwenden und auch zusätzliche teure Ausstattungen, wie Konverter, einsparen zu können, ist es zweckmäßig, wenn die Stromschienenstrecke Drehstrom mit mindestens etwa 230 VAC, vorzugsweise etwa 400 VAC, für den Frequenzumrichter des Elektroantriebes und ggf. für die Batterie-Ladeeinrichtung bereitstellt, wobei der Elektroantrieb zweckmäßig einen in Stern oder Dreiecksschaltung betreibbaren Synchron- oder -Asynchronmotor aufweisen kann. Steht im Netz nur 230 V-Einphasen-Strom zur Verfügung, wird dieser für die Stromschienenstrecke auf Drehstrom umgerichtet.

Ein besonders wichtiger Aspekt der Erfindung mit eigenständiger Bedeutung liegt darin, dass die jeweilige Batterie eine Hochvolt-Batterie mit hoher Abgabe-Gleichspannung für den Zwischenkreis des Frequenzumrichters ist. Besonders geeignet sind Nickel/Metallhydride-Batterien oder Lithiumbatterien oder Nickel-Cadmium-Batterien (LiNiMnCo oder LiMnCo zum Beispiel), deren Vorteile hohe Ladekapazität und schnelle Ladevorgänge sind. Es kann Gleichstrom alternativ aus anderen, für diesen Zweck geeigneten Hochvolt-Batterien eingespeist werden.

Um teure Konverter einzusparen, ist es besonders wichtig, die Hochvolt-Batterie abgabeseitig an einen Zwischenkreis zumindest eines, vorzugsweise aller, einen an die Stromschienenstrecke anschließbaren Wechselstrom-Primärkreis, den Gleichstrom-Zwischenkreis, und einen an den Elektromotor anschließbaren Wechselstrom-Sekundärkreis aufweisenden Frequenzumrichter anschließbar ist.

Hierbei ist es zweckmäßig, wenn die Abgabe-Gleichspannung der Batterie um einen Faktor >1, vorzugsweise theoretisch um 1,41 (Wurzel aus 2) höher ist als die den Primärkreis des Frequenzumrichters beaufschlagende Wechselspannung aus der Stromschienenstrecke. Dieser Erhöhungsfaktor lässt mit der Batterie B eine erhöhte Abgabe-Gleichspannung abgeben, mit der effizient im Zwischenkreis des jeweiligen Frequenzumrichters die Motorsteuerung erfolgt.

In Europa steht häufig in den Primärkreis des Frequenzumrichters einspeisbarer Drehstrom mit 400 V, 50, Hz in drei Phasen zur Verfügung. Im Zwischenkreis des Frequenz-Umrichters beträgt dann die Gleichspannung etwa 564V (Faktor etwa 1, 41). Mit sechs oder einem mehrfachen von sechs 96-Volt-Batterien sind somit etwa 576 Volt, bei vollen Batterien sogar bis etwa 680 Volt, zu nutzen. Der Elektromotor wird in Sternschaltung betrieben. In USA und Kanada steht häufig Drehstrom mit 230 Volt, 60 Hz, in drei Phasen zur Verfügung, zum Einspeisen in den Primärkreis. Im Zwischenkreis liegt Gleichstrom mit etwa 324 Volt an. Mit drei oder einem Mehrfachen von drei 108-Volt-Batterien sind mindestens etwa 324 Volt nutzbar. Der Elektromotor wird in Dreieckschaltung betrieben. Es lassen sich somit in beiden Marktbereichen in den Robotern gleiche Elektromotoren einsetzen.

Die erwähnten Spannungswerte sind nicht beschränkende theoretische Beispiele. Die in den Zwischenkreis eingespeiste Gleichspannung kann in der Praxis variieren, z.B. durchaus um etwa 10% höher sein.

Um die Hochvolt-Batterie ohne separate Ladeeinrichtung zu laden, ist es zweckmäßig, die Batterie über eine separate Lade-Leitung an den Zwischenkreis wenigstens eines Frequenzumrichters anzuschließen, überwacht z.B. durch einen Schalter oder ein Relais. Hierzu eignet sich z.B. der Frequenzumrichter eines Elektroantriebs, der nicht ständig in Betrieb ist.

Ein weiterer wichtiger Gesichtspunkt liegt darin, dass die Andockvorrichtung eine Sicherheitsschaltung aufweist, mit der bis zum im Wesentlichen vollen Andocken des Roboters Niederspannung bis zum Beispiel maximal 48 V bereitgestellt, und erst bei vollem Andocken auf den Drehstrom umgeschaltet wird. Diese Sicherheitsschaltung vermeidet, dass aus Versehen oder aus Vandalismus beim Andockvorgang an stromführende Teile eingegriffen wird und Schäden hervorgerufen oder Personen verletzt werden.

Zweckmäßig weist der Fütter-Roboter Elektroantriebe für Mischorgane, für Antriebs- und/oder Lenkräder und für wenigstens eine Ausdosiervorrichtung auf. Die Elektroantriebe können nur Elektromotoren umfassen, aber auch Getriebe wie Planetengetriebe und dergleichen, beispielsweise, um mit effizienter hoher Ausgangsdrehzahl des Elektromotors geringe Antriebsdrehzahlen mit hohen Drehmomenten erzeugen zu können.

Da speziell beim Ausdosieren die Mischorgane des Fütter-Roboters und die Ausdosiervorrichtung relativ hohen Strombedarf haben, ist es zweckmäßig, jedem Mischorgan einen eigenen drehzahlregelbaren Elektroantrieb zuzuordnen, oder beide Mischorgane mit einem gemeinsamen Elektroantrieb auszustatten, der einen Antriebsstrang mit einer Schaltkupplung zwischen den Mischorganen aufweist. Diese Lösungen sind energetisch besonders vorteilhaft. Es ist eine Tatsache, dass das Drehmoment einer beispielsweise vertikalen Mischschnecke als Mischorgan stark vom Schneckendurchmesser abhängt. Somit ist es zweckmäßig, bei einem Inhalt von beispielsweise 2,5 oder 3 m³ des Behälters zwei Mischorgane mit kleineren Durchmessern von etwa 80 cm auszustatten, im Vergleich zu einem Behälter der gleichen Größe mit einer einzigen Mischschnecke von etwa 1,5 m Durchmesser. Dies gilt genauso für größere Behälter von beispielsweise 10 oder 12 m³. Denn dann lässt sich das Ausdosieren unter Antreiben zunächst nur eines Mischorgans beginnen, bis der zugeordnete Teil der Mischkammer im Behälter nahezu leer ist. Erst dann wird das andere Mischorgan angetrieben. Somit ist es nicht notwendig, den Gesamtinhalt von 0 bis auf die Ausdosiergeschwindigkeit zu bringen, sondern es wird nur eine und dann zeitversetzt das zweite Mischorgan zugeschaltet, sobald der Behälter einen geringeren Inhalt hat. Es kann auch so vorgegangen werden, dass zunächst das zweite Mischorgan Futter zum ersten Mischorgan fördert und dann wieder abgeschaltet wird, usw., bis sich der Inhalt im hinteren Teil des Behälters nicht mehr nennenswert vom Inhalt des vorderen Teils zum Abschluss des Ausdosierzyklus unterscheidet. Dann können beide Mischorgane permanent angetrieben werden, wobei sie nur geringe Antriebsdrehmomente brauchen. Das Ausdosieren soll nämlich mit einer möglichst geringen Drehzahl erfolgen, etwa mit 15 bis 20 U/min. Um jedoch das restliche Futter herauszuschleudern, muss die Drehzahl am Ende des Ausdosierzyklus bis auf beispielsweise 50 U/min zunehmen, was über den jeweiligen Frequenzumrichter möglich ist, alternativ aber auch über ein schaltbares Getriebe.

In einer zweckmäßigen Form des Fütter-Roboters ist für die Mischorgane und gegebenenfalls die Ausdosiervorrichtung eine Steuerung vorgesehen, mit der abhängig von von Sensoren bereitgestellten Betriebsparametern nur jeweils eines der Mischorgane oder beide antreibbar und drehzahlregelbar ist bzw. sind. Solche Betriebsparameter können der jeweilige Strombedarf, das Füllgewicht im Behälter, die Füllhöhe im Behälter oder die Ausdosiermenge pro Zeiteinheit sein, oder ähnliche signifikante Betriebsparameter.

In einer zweckmäßigen Ausführungsform der Anlage sind die Fahrstrecke des Roboters durch ein Leitschienennetz, vorzugsweise mit Weichen und Abzweigungen, wie auch das Stromschienennetz aus den Stromschienenstrecken, vorbestimmt.

Die jeweilige Stromschienenstrecke ist in etwa bodenparallel und geringfügig oberhalb des Behälters des Roboters stationär verbaut, sodass die Fahrbewegungen des Roboters nicht behindert werden und er dennoch jeweils problemlos Zugang zur Stromversorgung erhält.

Bei einer zweckmäßigen Ausführungsform des Roboters, und zwar des Fütter-Roboters oder des Verteil-Roboters, ist die Batterie eine mit einer hohen Abgabegleichspannung betreibbare Hochvolt-Batterie. Besonders geeignete Hochvolt-Batterien sind für diesen Einsatzzweck kostengünstige, leistungsstarke und lange einsetzbare Nickel/Metallhydride- oder Lithium oder Nickel/Cadmium -Batterien. Alternativ können andere Typen von Hochvolt-Batterien verwendet werden.

Anhand der Zeichnungen werden Ausführungsformen des Erfindungsgegenstandes erläutert. Es zeigen:
- Fig. 1: eine Schemadraufsicht auf eine Anlage, geeignet zur Viehfütterung unter Verwendung eines selbstfahrenden Roboters,
- Fig. 2: eine Ausführungsform einer Futterküche in Perspektivdarstellung,
- Fig. 3: eine andere Ausführungsform einer Futterküche in Perspektivdarstellung,
- Fig. 4: eine Schnittdarstellung einer Ausführungsform eines als Fütter-Roboter, ausgebildeten Roboters,
- Fig. 5: eine andere Ausführungsform eines Fütter-Roboters in einem Längsschnitt,
- Fig. 6: ein Schaltbild einer Ausführungsform eines an eine Stromschienenstrecke angeschlossenen Roboters und
- Fig. 7: ein weiteres Schaltbild, ähnlich dem von Fig.6

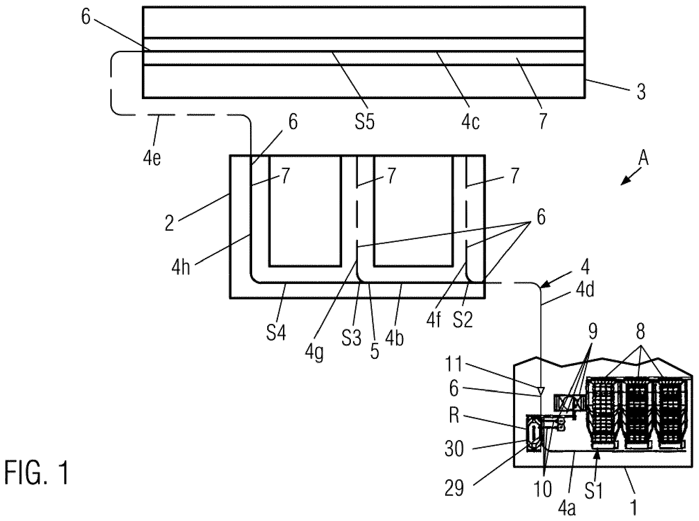

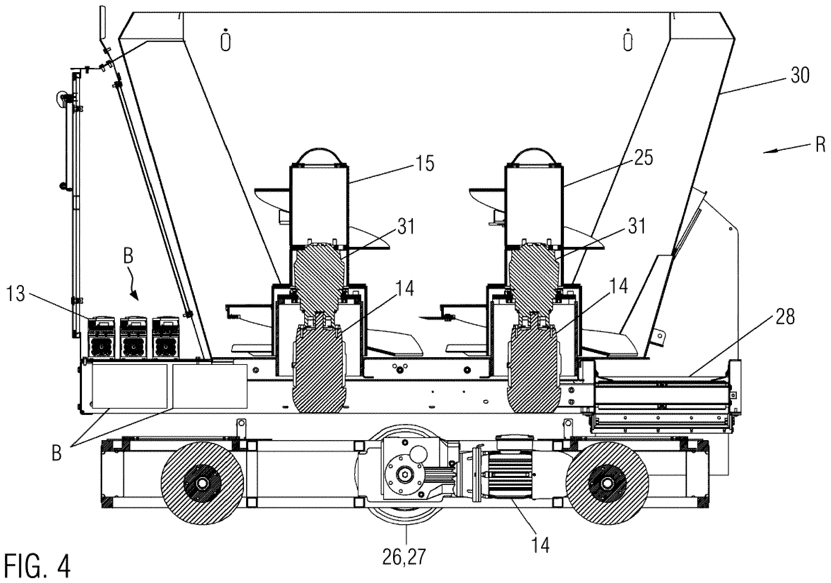

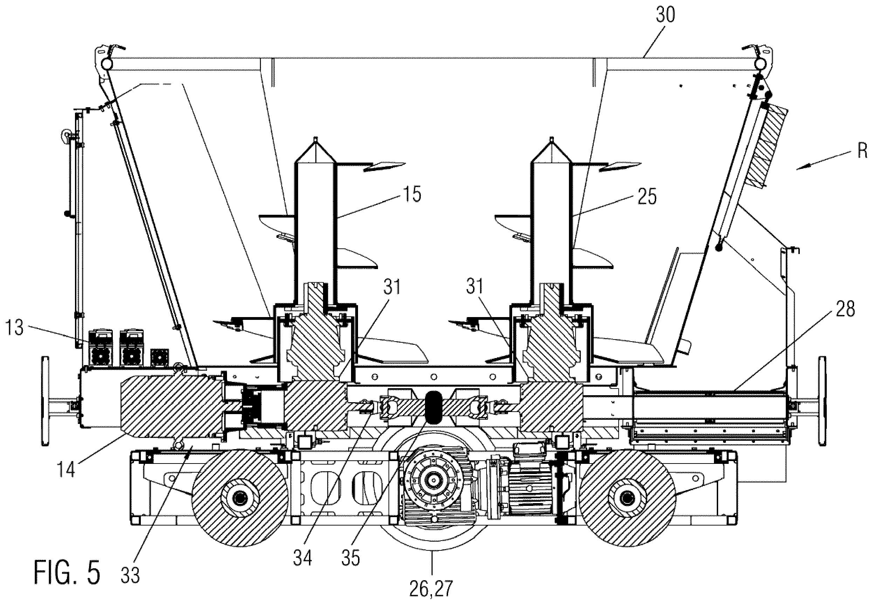

Die Fig. 1, 2 und 3 zeigen schematisch eine Anlage A zur Viehfütterung unter Verwendung eines Roboters R, der in den Fig. 4 und 5 in zwei möglichen, nicht beschränkenden Ausführungsformen eines Fütter-Roboters jeweils im Längsschnitt gezeigt ist.

Die Anlage A ist elektrisch betreibbar und energetisch hocheffizient, weil der Roboter R zumindest in einer Futterküche 1 mehrere Stellen anfahren kann, an denen er Drehstrom zur Verfügung hat, z.B. um Arbeiten mit hohem Strombedarf wie beispielsweise das Mischen und Schneiden von Futter mit dem Drehstrom auszuführen, und dabei stets auch wenigstens eine bordeigene Batterie B beiladen oder aufladen oder vollladen kann, wobei die Batterie B zweckmäßig eine leistungsstarke Hochvolt-Batterie wie eine Nickel/Metallhydride-Batterie oder eine Lithium-Batterie oder eine Nickel/Cadmium-Batterie oder eine sogenannte Traktionsbatterie mit gestapelten Folien ist. Der Drehstrom, die Hochvolt-Batterie B und die an mehreren Stellen verfügbare Stromversorgung ermöglichen in Kombination mit leistungsstarken, drehzahlregelbaren Elektromotoren in Elektroantrieben 14 der Komponenten des Roboters R störungsfreien Dauerbetrieb unter optimalen Bedingungen, was zur Energieeffizienz der Anlage A beiträgt.

In Fig. 1 ist als nicht beschränkendes Beispiel einer solchen Anlage A eine Futterküche 1 gezeigt, der in der dargestellten Ausführungsform zwei Ställe 2, 3 in Abständen von der Futterküche 1 zugeordnet sind. Der Stall 2 beherbergt beispielsweise hochleistungsfähiges Milchvieh, während der Stall 3 andere Viehsorten beherbergt. Das Vieh im Stall 2 benötigt beispielsweise mehr oder qualitativ besseres Futter als das Vieh im Stall 3. Beide Ställe 2, 3 werden vom Roboter R zyklisch angefahren, um das Vieh jeweils bedarfsgerecht zu versorgen, wobei das Futter in der Futterküche 1 zusammengestellt und gemischt wird. Die Futterküche 1 steht mit den Ställen 2, 3 über eine Fahrstrecke 4 in Verbindung, beispielsweise mit Leitschienen, Hängeschienen oder im Boden verlegten Schleifen. Der Roboter R ist entweder ein Fütter-Roboter gemäß Fig. 4 - 7 oder ein mit Futter oder sogar bereits gemischtem Futter beladbarer Verteil-Roboter (nicht gezeigt).

Es können auch mehrere Futterküchen 1 oder mehr als in Fig. 1 - 3 gezeigte Lager 8, 9 in bzw. bei der Futterküche 1 vorgesehen sein, als gezeigt, und mehr oder weniger als zwei Ställe 2, 3. In der gezeigten Ausführungsform sind in der Futterküche 1 drei Lager 8 nebeneinander für unterschiedliche Futtersorten vorgesehen, sowie ein aus Bunkern gebildetes Lager 9 für beispielsweise Zusatzstoffe.

Die Fahrstrecke 4 erstreckt sich an den Lagern 9, 8 in der Futterküche 1 vorbei, hier abgewinkelt. Zum Beladen des Roboters R können nicht gezeigte Beladeeinrichtungen verwendet werden. Das Lager 8 kann z.B. drei Zusatzbunker haben, einen z.B. für eine große Menge Biertreber/Zuckerrübengeschnitzel und zwei Mineraliendosierer 9 für Mehle oder Salze, jeweils mit Auslaufschnecke 10.

In der Futterküche 1 ist ein Abschnitt 4a der Fahrstrecke vorgesehen, dem entlang sich eine Stromschienenstrecke S1 mit wenigstens einer Andockvorrichtung 6 erstreckt, über welche der elektrisch betriebene Roboter R, wird, an die Stromschienenstrecke S1 andocken kann und dann an der Stromschienenstrecke S1 entlang fährt, oder von der Stromschienenstrecke S1 abdockt, und dann elektrisch über die Batterie B in einem Abschnitt 4d zum Stall 2 fährt. In der Futterküche 1 steht oder fährt der Roboter R gerade zu dem Lager 9, um von dort über eine Zuführvorrichtung 10 (Ausfuhrschnecke) beladen zu werden. Vom Roboter R ist ein Behälter 30 erkennbar, und wenigstens ein Stromabnehmer 29 zur elektrischen Verbindung mit der Stromschienenstrecke S1. Die Stromübertragung zum Roboter R kann galvanisch, z. B. mit einem Schleifkontakt, und zwei Stromabnehmern 29 erfolgen, oder alternativ berührungslos über Induktion. Ferner ist in Fig. 1 bei der Andockvorrichtung 6 ein Einführtrichter 11 angedeutet, über welchen Stromabnehmer 29 des Roboters R zuverlässig in die Andockvorrichtung 6 geführt werden. Alternativ könnte hier eine Zwangslenkeinrichtung vorgesehen sein, oder könnten, der oder die Stromabnehmer 29 federnd besserbar sein um die exakte Kopplung zwischen dem Roboter R und der Stromschienenstrecke S1 sicherzustellen.

Im Stall 2 sind als nicht beschränkendes Beispiel drei zueinander im Wesentlichen parallele Futtergassen 7 angedeutet, und im Stall 3 eine längs durchgehende Futtergasse 7. Zu fütterndes Vieh kann an beiden Seiten der jeweiligen Futtergasse 7 stehen, oder an einer Seite.

Als Option sind in Fig. 1 zusätzlich zu der Stromschienenstrecke S1 in der Futterküche 1 im Stall 2 weitere Stromschienenstrecken S2, S3 und S4 verbaut, zweckmäßig, wie in der Futter-küche 1, auf nicht gezeigten Abstützungen oder Abhängungen und im Wesentlichen bodenparallel und geringfügig oberhalb des Behälters 30 des Roboters R. Die Stromschienenstrecken S2, S3 und S4 sind über Weichen 5 miteinander verknüpft. Die Stromschienenstrecke S2 erstreckt sich beispielsweise ausgehend von einer Andockvorrichtung 6 in einem Bogen über annähernd 90° und entlang eines bis zum Ende der Futtergasse 7 führenden Abschnitts 4f der Fahrstrecke 4, und zwar bis zu einer weiteren Andockvorrichtung 6 im Abstand von Ende der Futtergasse 7. Ferner erstreckt sich entlang eines Abschnitts 4b der Fahrstrecke senkrecht zu den Futtergassen 7 im Stall 2 eine weitere Stromschienenstrecke S4, von der über eine Weiche 5 eine Stromschienenstrecke S3 in die mittlere Futtergasse 7 abzweigt, und die sich bis über einen zum hinteren Ausgang des Stalls 2 führenden Abschnitt 4h der Fahrstrecke 4 und entlang der Stromschienenstrecke S4 erstreckt. Im Bereich des hinteren Ausgangs aus dem Stall 2 zu einem Abschnitt 4 der Fahrstrecke 4e ist eine weitere Andockvorrichtung 6 installiert. Entlang der Abschnitte 4d und 4e der Fahrstrecke 4 sind keine Stromschienenstrecken verbaut, beispielsweise weil dies freies Gelände der Anlage A ist. Schließlich ist optional im Stall 3 entlang der Futtergasse 7 über deren Gesamtlänge eine weitere Stromschienenstrecke S5 vorgesehen, die eine weitere Andockvorrichtung 6 aufweist.

Wie erwähnt, sind die weiteren Stromschienenstrecken S2, S3, S4 und S5 Optionen und nicht unbedingt erforderlich. Alternativ könnten bei weiteren externen Lagern oder Einrichtungen der Anlage (nicht gezeigt), wie z. B. Silos oder dergleichen, weitere Stromschienenstrecken jeweils mit mindestens einer Andockvorrichtung verbaut sein, d. h. nicht im freien Gelände, sondern bei oder in gegebenen Aufbauten.

Der Fahrbetrieb des Roboters R erfolgt in den Abschnitten beispielsweise 4d, 4e und über einen Teil der Abschnitte 4f und 4g über die Batterie B, kann hingegen bei der gezeigten Ausführungsform entlang der Stromschienenstrecken S2, S3, S4 und S5 aus dem Netz gespeist werden. Bei der Stromeinspeisung aus dem Netz kann die Batterie B ständig beigeladen oder vollgeladen werden. Es ist selbstverständlich möglich, den Roboter R mit mehreren Batterien B auszustatten. Ferner kann die Anlage A mehr als einen Roboter R benutzen, die entweder hintereinander fahren oder sich überkreuzen können.

Es ist ferner denkbar, den Roboter R nicht wie in der gezeigten Ausführungsform vom Ende der Futtergasse 7 im Stall 3 zurückfahren zu lassen, sondern es könnte dann ein weiterer Abschnitt der Fahrstrecke 4 vorgesehen sein, sodass der Roboter aus dem Stall 3 direkt zur Futterküche 1 zurückkehrt.

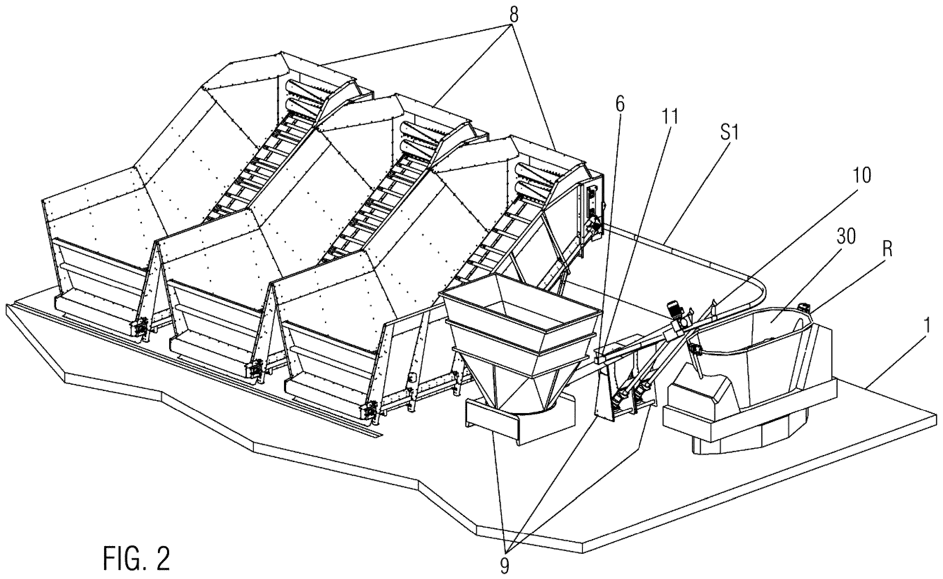

Fig. 2 verdeutlicht in einer Perspektivansicht die Futterküche 1 von Fig. 1 mit den drei Lagern 8, die zueinander parallel angeordnet sind, und dem als Bunker 9 ausgebildeten Lager 9 mit seinen Zuführvorrichtungen 10. Ferner ist die Stromschienenstrecke S1 gezeigt, die sich hier um 90° abknickend entlang dem Lager 9 und entlang der Lager 8 erstreckt. Abhängungen oder Bodenstützen der Stromschienenstrecke S1 sind in Fig. 2 nicht angedeutet.

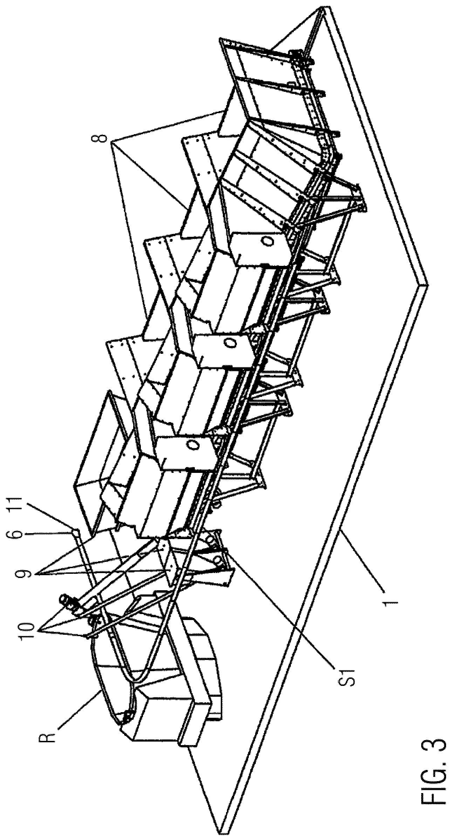

Fig. 3 zeigt eine andere Ausführungsform einer Futterküche 1, hier mit wiederum drei parallelen Lagern 8 und dem Lager 9 sowie der Stromschienenstrecke S1, die im Wesentlichen die ganze Futterküche 1 dort abdeckt, wo der Roboter R zu fahren hat, um beladen zu werden oder die Ladung zu mischen und zu schneiden. Mischen und Schneiden sind Arbeiten des Roboters R, die den höchsten Strombedarf haben und zweckmäßig deshalb aus dem Netz gespeist werden, wobei die Batterie B beigeladen oder jeweils vollgeladen wird.

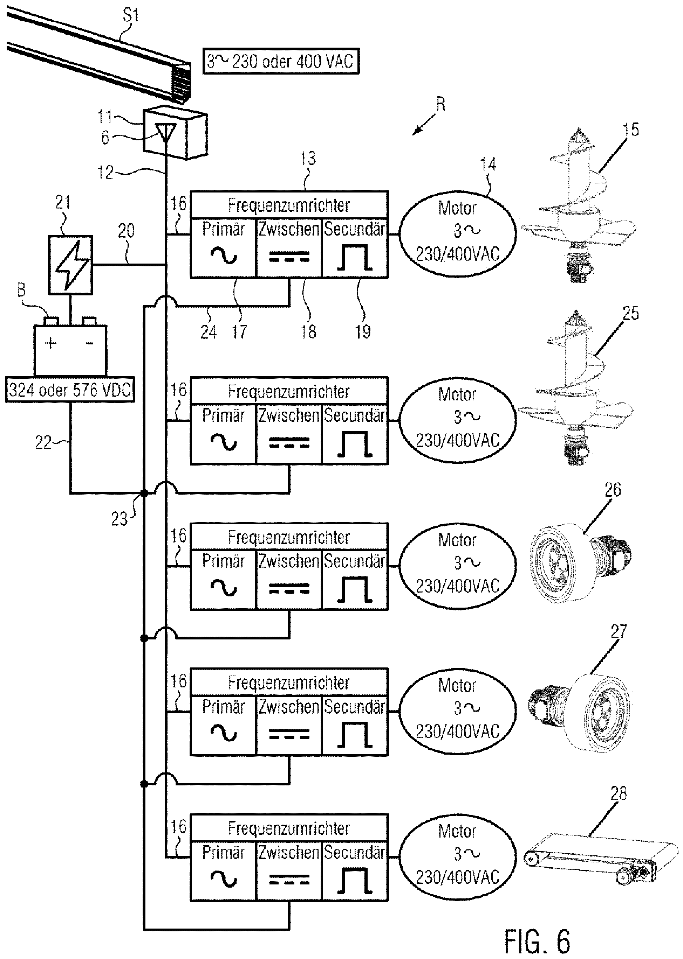

Der Längsschnitt des Fütter-Roboters R in Fig. 4 zeigt den oval-konischen Behälter 30, der auf einem Fahrwerk ruht, das Fahr- und/oder Lenkräder 26, 27 aufweist, mit denen die Bewegungsenergie auf den Boden übertragen wird, wenn der Roboter R fährt. Im Behälter 30 sind optional mindestens zwei Mischorgane 15, 25 als vertikal stehende Mischschnecken verbaut, wobei jedes Mischorgan 15, 25 über einen eigenen Elektroantrieb 14 angetrieben wird, beispielsweise über ein Getriebe 31. Weitere Elektroantriebe 14 sind für die Fahr- und/oder Lenkräder 26, 27 vorgesehen. Die Elektroantriebe 14 enthalten zweckmäßig Synchron- oder Asynchronmotoren in Stern- oder Dreieckschaltung. Die Getriebe können Schaltgetriebe oder Planetengetriebe sein. In einem Nebenabteil des Behälters 30 sind beispielsweise mehrere Batterien B angeordnet. Der Roboter R verfügt über nicht näher hervorgehobene Wägeeinrichtungen und Steuereinrichtungen, beispielsweise die in Fig. 6 gezeigten Frequenzumrichter 13 zur Drehzahlregelung der Elektroantriebe 14. Ferner kann eine Steuerung vorgesehen sein, um die Mischorgane 15, 25 gemeinsam oder einzeln anzutreiben.

Der Fütter-Roboter R verfügt ferner über eine Ausdosiervorrichtung 28, beispielsweise wenigstens einem seitlich am Behälter 30 angeordneten Schieber zum Verschließen und Freilegen einer Ausdosieröffnung und ein oder mehrere Querförderbänder. Um beim Ausdosieren in der jeweiligen Futtergasse 7 energieeffizient zu arbeiten, kann bei vollem Behälter 30 (abgetastet über Gewichts- oder Füllsensoren) zunächst nur ein Mischorgan angetrieben werden, um auszudosieren, während das andere Mischorgan steht und erst eingeschaltet wird, wenn sich der Füllstand verringert hat, um den anderen Mischorgan zuzuliefern, während dieses weiterhin ausdosiert oder vorübergehend steht. Ist genügend Futter umgeschichtet, kann das gerade nicht ausdosierende Mischorgan wieder stillgesetzt werden. Es sind auf diese Weise verschiedene Verfahren zum Antreiben der Mischorgane und gegebenenfalls der Ausdosiervorrichtung möglich, und zwar im Hinblick darauf, möglichst viel elektrische Energie einzusparen, ohne den Ausdosierbetrieb einzuschränken.

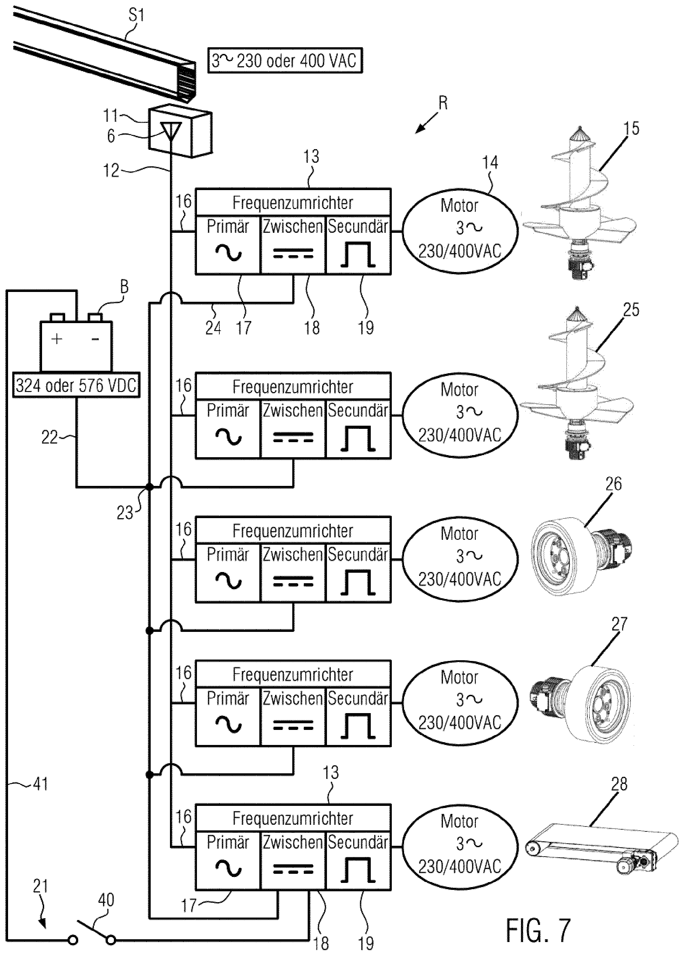

Die in Fig. 5 gezeigte Ausführungsform des Fütter-Roboters R unterscheidet sich von der der Fig. 4 vor allem dadurch, dass für die zwei Mischorgane 15, 25 ein gemeinsamer Elektroantrieb 14 vorgesehen ist, der einen sich über beide Mischorgane 15, 25 erstreckenden Antriebsstrang 33 treibt, der sich über die Getriebe 31 erstreckt und dazwischen eine Zwischenwelle 34 mit wenigstens einer Schaltkupplung 35 enthält. Dieses Konzept ermöglicht es ebenfalls, beide Mischorgane 15, 25 gleichzeitig oder wechselweise einzeln zu betreiben. Gegebenenfalls sind die Getriebe 31 schaltbare Planetengetriebe, um unterschiedliche Drehzahlen und/oder Drehmomente für die Mischorgane 15, 25 abzugeben. Die Fig. 6 und 7 verdeutlichen die elektrische Verschaltung des Fütter-Roboters R bei einer Ausführungsform mit eigenen Elektroantrieben 14 für die beiden Mischorgane 15, 25, eigenen Elektroantrieben für die Räder 26, 27, und einen Elektroantrieb für ein Querförderband 28 als Ausdosiervorrichtung.

Der Fütter-Roboter R in Fig. 6 hat beispielsweise über die Andockvorrichtung 6 an die Stromschienenstrecke S1 in der Futterküche angedockt und wird über eine Hauptleitung 12 mit Drehstrom von beispielsweise 400 VAC (400 V Wechselstrom) gespeist. Für jeden drehzahlregelbaren Elektroantrieb 14 ist ein Frequenzumrichter 13 vorgesehen, der über eine Zweigleitung 16 an die Hauptleitung 12 angeschlossen ist, und einen Wechselspannungs-Primärkreis 17, einen Gleichspannungs-Zwischenkreis 18 und einen Wechselspannungs-Sekundärkreis 19 aufweist. Wenigstens eine Zweigleitung 20 von der Hauptleitung 12 führt zu einer hier bordeigenen Batterie-Ladeeinrichtung 21, von der über die Batterie B eine Leitung 22 zu einem Knoten 23 führt. Vom Knoten 23 führen Leitungen 24 zu jedem Zwischenkreis 18 eines Frequenzumrichters 13.

Die wenigstens eine Batterie B ist eine Hochvolt-Batterie, die systembedingt theoretisch in der Lage ist, eine um einen Faktor >1, nämlich 1, 41 höheren Gleichstrom, mit hier etwa 564 V, aus dem 400 VAC-Drehstrom abzugeben.

Ferner ist in Fig. 6 und 7 mit 11 eine Sicherheitsschaltung angedeutet, die bei der jeweiligen Andockvorrichtung 6 beispielsweise dafür sorgt, dass zunächst nur eine geringe Spannung von beispielsweise bis zu 48 V übertragen wird, solange stromführende Teile von außen noch zugänglich sind, und erst dann auf den vollen Drehstrom umschaltet, wenn die in Fig. 6 nicht gezeigten Stromabnehmer 29 des Roboters R so angedockt haben, dass von außen kein Zugriff mehr auf stromführende Komponenten möglich ist (Unfallschutz).

Solange in Fig. 6 und 7 der Fütter-Roboter R an die Stromschienenstrecke S1 (oder die anderen Stromschienenstrecken S2 bis S5) angedockt ist und entweder steht oder fährt, können die Elektroantriebe 14 aus dem Netz versorgt werden, und wird gleichzeitig die Batterie B beigeladen oder vollgeladen gehalten. Hat der Fütter-Roboter R hingegen von der Stromschienenstrecke S1 abgedockt, werden die Elektroantriebe 14 über die Batterie B betrieben, wobei die Batterie B hohe Gleichspannung in den jeweiligen Zwischenkreis 18 einspeist, aus der in dem Sekundärkreis 19 die für den Elektroantrieb 14 gerade gebrauchte Wechselspannung erzeugt wird.

Der Roboter R ist selbstfahrend, wird automatisch beladen, mischt beispielsweise während des Aufenthalts in der Futterküche 1, oder auch noch beim Anfahren der jeweiligen Futtergasse, und dosiert das Futter für das Vieh nach einer vorgegebenen Programmierung. Falls nur in der Futterküche 1 die Stromschienenstrecke S1 verbaut ist, erfolgt der Fahrbetrieb und erfolgt das Ausdosieren über die Batterie B, sind hingegen, wie beispielsweise in Fig. 1 angedeutet, mehrere Stromschienenstrecken S1 bis S5, jeweils mit mindestens einer Andockvorrichtung 6, in der Anlage verbaut, ausgenommen die Fahrstreckenabschnitte im freien Gelände, dann können der Fahrbetrieb und/oder der Ausdosierbetrieb wahlweise über die Batterie oder aus dem Netz oder in Kombination dieser beiden Stromquellen erfolgen.

Die in Fig. 7 gezeigte Schaltung des Fütter-Roboters R unterscheidet sich von Fig. 6 durch eine Variante der Batterie-Ladeeinrichtung 21, und zwar ist anstelle der bordeigenen separaten Ladeeinrichtung 21 von Fig. 6 die Hochvolt-Batterie B zum Laden über eine eigene Leitung 41 und einen Schalter/Relais 40 an einen Zwischenkreis 18 eines Frequenzumrichters 13, hier der Ausdosiervorrichtung 28, angeschlossen, um hohe Gleichspannung zum Laden abzugreifen. Hier kann eine elektronische Boost-Schaltung eingesetzt werden, um den Ladevorgang zu optimieren.

Anhand der Fig. 4-7 wurde der Fütter-Roboter R erläutert, der den Misch- und/oder Schneidebetrieb mit Drehstrom ausführt. Die Erfindung umfasst als Teil der Anlage A jedoch auch einen oder mehrere nicht gezeigte Verteil-Roboter R, der jeweils mit Futter oder bereits gemischtem Futter in der Futterküche 1 beladen wird. Gegenüber den Fig. 4-7 entfallen beim Verteil-Roboter R die Mischorgane 15, 25 und deren Antriebe. Der Verteilroboter R kann optional eine Ausdosiervorrichtung enthalten, die nicht drehzahlregelbare Elektroantriebe umfasst. Jedoch ist zum selbständigen Fahren wenigstens ein drehzahlregelbarer Elektroantrieb 14 mit einem Frequenzumrichter 13 vorgesehen, an dessen Gleichspannungs-Zwischenkreis 18 die Hochvoltbatterie B anschließbar ist.

In Fig. 6 ist gestrichelt eine Detailvariante gezeigt. Anstelle einer bordeigenen Ladeeinrichtung 21 des Roboters R ist hier wenigstens eine stationäre Ladeeinrichtung 21 vorgesehen, die bei angedocktem Roboter R die Batterie B über eine von der Hauptleitung 12 getrennte Ladeleitung mit Gleichstrom speist.

## Patentansprüche

1. Anlage (A), geeignet zur Viehfütterung, mit wenigstens einer mehrere Lager (8, 9) für Futter und/oder Zusätze enthaltenden Futterküche (1), wenigstens einem Futterausdosierbereiche (7) enthaltenden Vieh-Stall (2, 3), der über Roboter-Fahrstrecken (4) zumindest mit der Futterküche (1) verbunden ist, und wenigstens einem elektrisch betreibbaren, selbstfahrenden Roboter (R) mit zumindest einem Mischorgan (15, 25) und einer Ausdosiervorrichtung (28) in einem auf einem Fahrwerk mit Antriebs- und/oder Lenkrädern (26, 27) angeordneten Behälter (30), wenigstens einem über einen Frequenzumrichter (13) drehzahlregelbaren Elektroantrieb (14) zumindest für das Mischorgan (15, 25), und wenigstens einer über eine Batterie-Ladeeinrichtung (21) ladbaren Batterie (B), wobei der Elektroantrieb (14) zumindest in der Futterküche (1) über wenigstens einen Stromabnehmer (29) an eine Stromversorgung anschließbar ist, **dadurch gekennzeichnet, dass** zumindest in der Futterküche (1) als Stromversorgung eine an den Lagern (8, 9) vorbeigeführte Stromschienenstrecke (S1) und wenigstens eine eine Roboter-Einlaufstelle in die und eine Roboter-Auslaufstelle aus der Stromschienenstrecke (S1) definierende Andockvorrichtung (6) vorgesehen sind, der Roboter (R) sich an der Andockvorrichtung (6) andockt, und dass die Stromschienenstrecke (S1) sich in der Futterküche (1) entlang der Lager (8,9) erstreckt, sodass im ganzen Bereich der Futterküche (1) ohne Batterie-Einsatz der Behälter (30) effizient befüllt und Futter gemischt werden kann.

2. Anlage nach Anspruch 1, **dadurch gekennzeichnet, dass** der Roboter (R) ein zumindest in der Futterküche (9) im Behälter (30) mit Futter beladbarer, selbstmischender Fütter-Roboter ist.

3. Anlage nach Anspruch 2, **dadurch gekennzeichnet, dass der Fütter-Roboter** mindestens zwei Mischorgane (15, 25) im Behälter (30) aufweist.

4. Anlage nach Anspruch 1, **dadurch gekennzeichnet, dass** der Roboter (R) ein zumindest in der Futterküche (1) mit, vorzugsweise sogar bereits vorgemischtem, Futter im Behälter (30) beladbarer Verteil-Roboter ist.

5. Anlage nach Anspruch 1, **dadurch gekennzeichnet, dass** zumindest in der Futterküche (1) mehrere Andockvorrichtungen (6) vorgesehen sind.

6. Anlage nach Anspruch 1, **dadurch gekennzeichnet, dass** zusätzlich in zumindest einem Stall (3, 2) wenigstens eine Stromschienenstrecke (S2, S3, S4, S5) und daran jeweils mindestens eine Andockvorrichtung (6) vorgesehen sind.

7. Anlage nach Anspruch 1, **dadurch gekennzeichnet, dass** Abschnitte (4d, 4e) der Fahrstrecke (4) zwischen der Futterküche (1) und dem jeweiligen Stall (2, 3) frei von Stromschienenstrecken und Andockvorrichtungen sind.

8. Anlage nach Anspruch 1, **gekennzeichnet durch** eine galvanische oder berührungslose Stromübertragung zwischen der Stromschienenstrecke und dem Roboter (R).

9. Anlage nach Anspruch 1, **dadurch gekennzeichnet, dass** jede Andockvorrichtung (6) einen Einlauftrichter (11) oder ein Zwangslenksystem für den Roboter (R), vorzugsweise dessen, vorzugsweise zweifach vorgesehene, Stromabnehmer (29) aufweist.

10. Anlage nach Anspruch 1, **gekennzeichnet durch** eine Drehstrom-Stromschienen-Strecke (S1 bis S5) für Drehstrom mit mindestens etwa 230 VAC, vorzugsweise etwa 400 VAC, für den Frequenzumrichter (13) des Elektroantriebes (14) und ggf. die Batterie-Ladeeinrichtung (21), wobei der jeweilige Elektroantrieb (14), vorzugsweise, einen in Stern- oder DreieckSchaltung betreibbaren Synchron- und/oder Asynchronmotor aufweist.

11. Anlage nach Anspruch 1, **dadurch gekennzeichnet, dass** die Batterie (B) im Roboter (R) mindestens eine Hochvolt-Batterie, vorzugsweise eine Nickel/Metallhydride-Batterie oder eine Lithium-Batterie oder eine Nickel-Cadmium-Batterie ist.

12. Anlage nach Anspruch 11, **dadurch gekennzeichnet, dass** die Hochvolt-Batterie (B) zumindest abgabeseitig an einen Gleichstrom-Zwischenkreis (18) zumindest eines, einen Wechselstrom-Primärkreis (17), den Gleichstrom-Zwischenkreis (18) und einen Wechselstrom-Sekundärkreis (19) aufweisenden Frequenzumrichter (13) anschließbar ist, und dass die Abgabe-Gleichspannung der Hochvolt-Batterie (B) um einen Faktor >1, vorzugsweise um etwa 1,41, höher ist als die den Wechselstrom-Primärkreis (17) des Frequenzumrichters (13) beaufschlagende Wechselspannung.

13. Anlage nach Anspruch 1, **dadurch gekennzeichnet, dass** die Ladeeinrichtung (21) eine einen Schalter oder ein Relais (40) enthaltende Leitung (41) zwischen der Hochvolt-Batterie (B) und wenigstens einem Gleichstrom-Zwischenkreis (18) eines Frequenz-Umrichters (13) umfasst.

14. Anlage nach Anspruch 1, **dadurch gekennzeichnet, dass** die Andockvorrichtung (6) eine Sicherheitsschaltung (11) aufweist, mit der bis zum im Wesentlichen vollen Andocken des Roboters (R) nur Niederspannung bis z. B. 48 V bereitgestellt und erst nach vollem Andocken auf Drehstrom umschaltbar ist.

15. Anlage nach Anspruch 2, **dadurch gekennzeichnet, dass** der Fütter-Roboter (R) über Frequenzumrichter (13) drehzahlregelbare Elektroantriebe (14) für Mischorgane (15, 25), für die Antriebs- und/oder Lenkräder (26, 27) und für die Ausdosiervorrichtung (28) aufweist.

16. Anlage nach Anspruch 3, **dadurch gekennzeichnet, dass** der Verteilroboter (R) wenigstens einen über wenigstens einen Frequenzumrichter (13) drehzahlregelbaren Elektroantrieb (14) für Fahr- und/oder Lenkräder (26, 27) aufweist.

17. Anlage nach Anspruch 3, **dadurch gekennzeichnet, dass** entweder jedes Mischorgan (15, 25) einen eigenen drehzahlregelbaren Elektroantrieb (14) aufweist, oder beide Mischorgane (15, 25) einen gemeinsamen Elektroantrieb (14) für einen Antriebsstrang (34) mit einer Schaltkupplung (35) zwischen den Mischorganen (15, 25) aufweisen.

18. Anlage nach Anspruch 3, **dadurch gekennzeichnet, dass** für die Mischorgane (15, 25) eine Steuerung vorgesehen ist, mit der abhängig von von Sensoren bereitgestellten Betriebsparametern, wie Strombedarf, Füllgewicht, Füllhöhe, Ausdosiermenge pro Zeiteinheit oder dergleichen, wahlweise nur jeweils eines der Mischorgane (15, 25) oder alle antreibbar und drehzahlregelbar ist bzw. sind.

19. Anlage nach Anspruch 1, **dadurch gekennzeichnet, dass** die Fahrstrecken (4) durch ein Leitschienennetz, vorzugsweise mit Weichen (5), auch mit Weichen zwischen verknüpften Stromschienenstrecken (S2 bis S4), vorbestimmt sind.

20. Anlage nach Anspruch 1, **dadurch gekennzeichnet, dass** die Stromschienenstrecke (S1 bis S5) in etwa bodenparallel und geringfügig oberhalb des Behälters (30) des Roboters (R) stationär verbaut ist.

## Claims

1. A system (A) configured for feeding livestock, comprising at least one feed preparation room (1) accommodating a plurality of storage vessels (8, 9) for feed and/or additives, at least one livestock stable (2, 3) including feed-dispensing zones (7) and connected at least to the feed preparation room (1) via robot travel paths (4), and at least one electrically operable self-propelled robot (R) including at least one mixing member (15, 25) and a metering device (28) in a container (30) arranged on a chassis with drive and/or steering wheels (26, 27), at least one electric drive (14) at least for the mixing member (15, 25) which can be speed-controlled by means of a frequency converter (13), and at least one battery (B) which can be charged via a battery charging device (21), the electric drive (14) being connectable to a power supply at least in the feed preparation room (1) via at least one current collector (29), **characterized in that,** at least in the feed preparation room (1), there are provided as power supply means a conductor rail section (S1) routed past the storage vessels (8, 9) and at least one docking device (6) defining a robot entry point and a robot exit point for the conductor rail section (S1), wherein the robot (R) docks at the docking device (6), and **in that** the conductor rail section (S1) extends in the feed preparation room (1) along the storage vessels (8, 9) so that in the entire area of the feed preparation room (1) without the use of batteries the container (30) can be efficiently filled and feed can be mixed.

2. The system according to claim 1, **characterized in that** the robot (R) is an automatically mixing feeding robot loadable with feed in the container (30) at least in the feed preparation room (9).

3. The system according to claim 2, **characterized in that** the feeding robot includes at least two mixing members (15, 25) in the container (30).

4. The system according to claim 1, **characterized in that** the robot (R) is a dispensing robot which can be loaded with preferably premixed feed in the container (30) at least in the feed preparation room (1).

5. The system according to claim 1, **characterized in that** a plurality of docking devices (6) are provided at least in the feed preparation room (1).

6. The system according to claim 1, **characterized in that** moreover at least one conductor rail section (S2, S3, S4, S5) and at least one docking device (6) arranged thereon are provided in at least one stable (3, 2).

7. The system according to claim 1, **characterized in that** sections (4d, 4e) of the travel path (4) between the feed preparation room (1) and the respective stable (2, 3) are free of conductor rail sections and docking devices.

8. The system according to claim 1, **characterized by** a galvanic or contactless current transmission between the conductor rail section and the robot (R).

9. The system according to claim 1, **characterized in that** each docking device (6) includes a feed hopper (11) or a forced steering system for the robot (R), preferably for its current collectors (29), which are preferably provided in duplicate.

10. The system according to claim 1, **characterized by** a three-phase conductor rail section (S1 to S5) for three-phase current with at least about 230 VAC, preferably about 400 VAC, for the frequency converter (13) of the electric drive (14) and, if appropriate, for the battery charging device (21), the respective electric drive (14) preferably including a synchronous and/or asynchronous motor which can be operated in star or delta connection.

11. The system according to claim 1, **characterized in that** the battery (B) in the robot (R) is at least a high-voltage battery, preferably a nickel/metal hydride battery or a lithium battery or a nickel-cadmium battery.

12. The system according to claim 11, **characterized in that** the high-voltage battery (B) can be connected, at least on the output side, to a DC intermediate circuit (18) of at least one frequency converter (13) including an AC primary circuit (17), the DC intermediate circuit (18) and an AC secondary circuit (19), and **in that** the output DC voltage of the high-voltage battery (B) is higher by a factor >1, preferably by about 1.41, than the AC voltage acting on the AC primary circuit (17) of the frequency inverter (13).

13. The system according to claim 1, **characterized in that** the charging device (21) comprises a line (41) including a switch or a relay (40) between the high-voltage battery (B) and at least one DC intermediate circuit (18) of a frequency converter (13).

14. The system according to claim 1, **characterized in that** the docking device (6) includes a safety circuit (11) by means of which only low voltage up to, for example, 48 V is provided until the robot (R) is substantially completely docked, and which can be switched over to three-phase current only after complete docking.

15. The system according to claim 2, **characterized in that** the feeding robot (R) includes electric drives (14) for mixing members (15, 25), for the driving and/or steering wheels (26, 27) and for the metering device (28) which can be speed-controlled via frequency converters (13).

16. The system according to claim 3, **characterized in that** the dispensing robot (R) includes at least one electric drive (14) for driving and/or steering wheels (26, 27), which can be speed-controlled via at least one frequency converter (13).

17. The system according to claim 3, **characterized in that** either each mixing member (15, 25) includes its own speed-controllable electric drive (14), or both mixing members (15, 25) include a common electric drive (14) for a drive train (34) with a shift clutch (35) between the mixing members (15, 25).

18. The system according to claim 3, **characterized in that** a controller is provided for the mixing members (15, 25), by means of which, depending on operating parameters provided by sensors, such as current demand, filling weight, filling level, metering amount per unit time or the like, selectively only one of the mixing elements (15, 25) or all of them can be driven and speed-controlled.

19. The system according to claim 1, **characterized in that** the routes (4) are predetermined by a conductor rail network, preferably with switches (5), including switches between linked conductor rail sections (S2 to S4).

20. The system according to claim 1, **characterized in that** the conductor rail section (S1 to S5) is stationarily installed approximately parallel to the ground and slightly above the container (30) of the robot (R).

## Revendications

1. Installation (A) adaptée à l'alimentation du bétail d'au moins une étable à bétail (2, 3), contenant plusieurs unités de stockage (8, 9) pour le fourrage et/ou des compléments, et contenant au moins des zones de dosage de fourrage (7), qui est reliée au moins à la cuisine d'alimentation (1) par des voies de déplacement de robot (4), et au moins un robot automoteur (R) à commande électrique, avec au moins un organe de mélange (15, 25) et un dispositif de dosage (28) dans un récipient (30) disposé sur un châssis avec des roues motrices et/ou directrices (26, 27), au moins un moteur électrique (14) dont la vitesse de rotation peut être réglée par l'intermédiaire d'un convertisseur de fréquence (13), au moins pour l'organe de mélange (15, 25), et au moins une batterie (B) pouvant être chargée par l'intermédiaire d'un dispositif de chargement de batterie (21), le moteur électrique (14) pouvant être raccordé à une alimentation électrique au moins dans la cuisine d'alimentation (1) par l'intermédiaire d'au moins un collecteur de courant (29), **caractérisé en ce qu'**il est prévu, au moins dans la cuisine d'alimentation (1), comme alimentation électrique, un tronçon de barre conductrice (S1) passant devant les unités de stockage (8, 9) et au moins un dispositif d'arrimage (6) définissant un point d'entrée du robot dans le tronçon de barre conductrice (S1) et un point de sortie du robot hors du tronçon de barre conductrice (S1), le robot (R) s'amarrant au dispositif d'arrimage (6), et **en ce que** le tronçon de barre conductrice (S1) s'étend dans la cuisine d'alimentation (1) le long des unités de stockage (8, 9), de sorte que dans toute la zone de la cuisine d'alimentation (1), le récipient (30) peut être rempli efficacement et les aliments mélangés sans utiliser de batterie.

2. Installation selon la revendication 1, **caractérisée en ce que** le robot (R) est un robot d'alimentation automélangeur pouvant être chargé en aliments au moins dans la cuisine d'alimentation (9) dans le récipient (30).

3. Installation selon la revendication 2, **caractérisée en ce que** le robot d'alimentation présente au moins deux organes de mélange (15, 25) dans le récipient (30).

4. Installation selon la revendication 1, **caractérisée en ce que** le robot (R) est un robot de distribution pouvant être chargé au moins dans la cuisine d'alimentation (1) avec de l'aliment, de préférence même déjà pré-mélangé, dans le récipient (30).

5. Installation selon la revendication 1, **caractérisée en ce que** plusieurs dispositifs d'arrimage (6) sont prévus au moins dans la cuisine d'alimentation (1) .

6. Installation selon la revendication 1, **caractérisée en ce qu'**il est prévu en outre dans au moins une étable (3, 2) au moins un tronçon de barre conductrice (S2, S3, S4, S5) et sur celui-ci respectivement au moins un dispositif d'arrimage (6).

7. Installation selon la revendication 1, **caractérisée en ce que** des sections (4d, 4e) de la voie de déplacement (4) entre la cuisine d'alimentation (1) et l'étable respective (2, 3) sont exemptes de tronçons de barre conductrice et de dispositifs d'arrimage.

8. Installation selon la revendication 1, **caractérisée par** une transmission de courant galvanique ou sans contact entre le tronçon de barre conductrice et le robot (R).

9. Installation selon la revendication 1, **caractérisée en ce que** chaque dispositif d'arrimage (6) présente une trémie d'entrée (11) ou un système de guidage forcé pour le robot (R), de préférence un pantographe (29), de préférence prévu en deux exemplaires.

10. Installation selon la revendication 1, **caractérisée par** un tronçon de barre conductrice triphasé (S1 à S5) pour un courant triphasé d'au moins environ 230 V, de préférence environ 400 V, pour le convertisseur de fréquence (13) du moteur électrique (14) et, le cas échéant, pour le dispositif de charge de batterie (21), le moteur électrique respectif (14) présentant, de préférence, un moteur synchrone et/ou asynchrone pouvant fonctionner selon un montage en étoile ou en triangle.

11. Installation selon la revendication 1, **caractérisée en ce que** la batterie (B) dans le robot (R) est au moins une batterie à haute tension, de préférence une batterie au nickel/hydrure métallique ou une batterie au lithium ou une batterie au nickel-cadmium.

12. Installation selon la revendication 11, **caractérisée en ce que** la batterie haute tension (B) peut être raccordée, au moins du côté de la sortie, à un circuit intermédiaire à courant continu (18) d'au moins un convertisseur de fréquence (13) présentant un circuit primaire à courant alternatif (17), le circuit intermédiaire à courant continu (18) et un circuit secondaire à courant alternatif (19), et **en ce que** la tension continue de sortie de la batterie haute tension (B) est supérieure d'un facteur >1, de préférence d'environ 1,41, à la tension alternative qui a un effet sur le circuit primaire à courant alternatif (17) du convertisseur de fréquence (13).

13. Installation selon la revendication 1, **caractérisée en ce que** le dispositif de charge (21) comprend une ligne (41) contenant un commutateur ou un relais (40) entre la batterie haute tension (B) et au moins un circuit intermédiaire à courant continu (18) d'un convertisseur de fréquence (13).

14. Installation selon la revendication 1, **caractérisée en ce que** le dispositif d'arrimage (6) présente un circuit de sécurité (11) avec lequel, jusqu'à l'arrimage sensiblement complet du robot (R), seule une basse tension jusqu'à par exemple 48 V est mise à disposition et ne peut être commutée en courant triphasé qu'après l'arrimage complet.

15. Installation selon la revendication 2, **caractérisée en ce que** le robot d'alimentation (R) présente, des moteurs électriques (14) à vitesse réglable, qui peuvent être réglés par des convertisseurs de fréquence (13), pour les organes de mélange (15, 25), pour les roues motrices et/ou directrices (26, 27) et pour le dispositif de dosage (28).

16. Installation selon la revendication 3, **caractérisée en ce que** le robot de distribution (R) présente au moins un moteur électrique (14) pour des roues de roulement et/ou directrices (26, 27), dont la vitesse de rotation peut être réglée par au moins un convertisseur de fréquence (13).

17. Installation selon la revendication 3, **caractérisée en ce que** soit chaque organe de mélange (15, 25) présente son propre moteur électrique (14) à vitesse réglable, soit les deux organes de mélange (15, 25) présentent un moteur électrique (14) commun pour une ligne d'entraînement (34) avec un embrayage (35) entre les organes de mélange (15, 25).

18. Installation selon la revendication 3, **caractérisée en ce qu'**il est prévu pour les organes de mélange (15, 25) une commande avec laquelle, en fonction de paramètres de fonctionnement mis à disposition par des capteurs, tels que le besoin en courant, le poids de remplissage, la hauteur de remplissage, la dose par unité de temps ou similaire, au choix, un seul des organes de mélange peut (15, 25), ou tous les organes de mélange peuvent, être entraîné·s et leur vitesse de rotation peut être réglée.

19. Installation selon la revendication 1, **caractérisée en ce que** les voies de déplacement (4) sont prédéterminées par un réseau de rails de guidage, de préférence avec des aiguillages (5), également avec des aiguillages entre des tronçons de barre conductrice (S2 à S4) reliés.

20. Installation selon la revendication 1, **caractérisée en ce que** le tronçon de barre conductrice (S1 à S5) est monté de manière stationnaire approximativement parallèlement au sol et légèrement au-dessus du récipient (30) du robot (R).
